# EUROPEAN PATENT APPLICATION

(11) **EP 3 905 062 A1**
(43) Date of publication of application: **03.11.2021**
(21) Application number: 20171674.3
(22) Date of filing: 27.04.2020
(51) Int. Cl.: G06F 16/2458

(54) **METHOD AND APPARATUS FOR SEARCHING FOR A DATA PATTERN**

(71) Applicant: Permutable Technologies Limited, London TW11 9NN (GB)
(72) Inventor: Medvedev, Alexandr, Minsk (BY); Chan, Wilson, Hampton, Middlesex TW12 2JG (GB)
(74) Representative: Gill Jennings & Every LLP

(57) **Abstract**

The invention relates to a computer implemented method of formulating a database query for searching for a data pattern in a data set stored in a database, the method comprising the following steps: receiving, from a user terminal, a series of graphical data points defining a target pattern to be searched; formulating a data structure for training a machine learning model using the series of graphical data points; training a machine learning model using the data structure; applying the trained machine learning model to the data set stored in the database to identify one or more candidate patterns, the candidate patterns comprising intervals of the data set which correspond to the target pattern within a predefined confidence level. Since the input is a series of graphical data points defining the target pattern, a specific pattern of interest may be entered much more efficiently and intuitively. By converting the user input into a data structure for training a machine learning model, the specific graphical user input is used as training data to identify similar patterns in a large data set, providing much greater search accuracy than previous methods.

## Description

### TECHNICAL FIELD

The present invention relates to a method and system for searching for a pattern in a data set, more particularly for querying a time series dataset in a database to find a known data pattern.

### BACKGROUND

There are many applications in which a particular variation behaviour in time series data is indicative or predictive of certain outcomes. For example, the changes in voltage over time in an electrocardiogram contain a large amount of information about the structure and function of the heart. Certain patterns in the variation of the voltage value within a certain interval of time can are predictive of potential health risks. Experienced clinicians are able to reliably diagnose certain conditions by identifying these known indicative patterns in electrocardiogram data sets. Similarly, meteorologists are able to predict future weather events by recognising patterns in time series data that signal developing environmental conditions that lead to those weather events. Another example is decision making in trading, for example in stock, foreign exchange, commodity and option trading, in which traders look for known patterns in time series financial data in order to predict future market changes and accordingly make investment decisions. Searching time series data for patterns in this way is used for both making decisions in real time, for example in stock trading, and in the analysis of large data sets to identify trends, for example in medical research.

Historically, in many such applications, pattern recognition is carried out manually, "by eye", and based on the decision maker's experience and knowhow to identify indicative trends in time series data. However, sifting through data to spot patterns manually is time consuming and with the increasing prevalence of large data sets and technological development, such pattern analysis, at least in certain applications, is becoming increasingly computer assisted.

However an ongoing issue with such computer assisted pattern searching is that, while a pattern may be immediately recognisable to the trained practitioner, it is difficult to efficiently and accurately define the specific pattern in a search query in order to search a data set. For example, the user may have to define multiple parameters, such as the length of the particular time period of interest, the amplitude of interest, the rate of change of the variable over time and so on, in order to define the pattern of interest and then search the data to find portions which fall within the defined parameters. This kind of parameter search can never capture precisely the specific character of a pattern, even if the practitioner can visually identify it to a high level of accuracy. Furthermore it can also be extremely time consuming to enter a search query in this way, which can be particularly problematic for applications in which decisions must be made immediately in real time, for example in clinical and financial trading applications. Often a large number of parameters may need to be defined to reliably identify the pattern of interest. Even then, the parameters may not always reliably identify all variants of the pattern and so there is a risk that the pattern, and accordingly the related condition which it signals, may be missed. In certain application, for example clinical systems, this can have serious implications.

Related to the problems of actually specifying the search query is the problem of the logic used to actually determine a match between the specified pattern and a pattern within a data set. Many commonly used distance-based approaches use a rigid approach which relies on the search query being specified perfectly by the user and therefore do not allow for any deviation in the specified pattern from the desired target pattern. Many such known approaches also rely on having high quality data sets to operate effectively. In real life applications such as those described above, the search query may be defined imperfectly and data sets contain outliers and/or some degree of data corruption, which prevents such known search algorithms working effectively.

Accordingly there exists a need for a method and apparatus which provides a human-machine interface which enables a human operator to enter a data pattern search query efficiently and accurately in a form that can be used to search a large imperfect data set to return accurate results.

### SUMMARY OF THE INVENTION

A first aspect of the invention provides a computer implemented method of formulating a database query for searching for a data pattern in a data set stored in a database, the method comprising the following steps, preferably performed at a server: receiving, from a user terminal, a series of graphical data points defining a target pattern to be searched; formulating a data structure for training a machine learning model using the series of graphical data points; training a machine learning model using the data structure; applying the trained machine learning model to the data set stored in the database to identify one or more candidate patterns, the candidate patterns comprising intervals of the data set which correspond to the target pattern within a predefined confidence level.

Since the input is a series of graphical data points defining the target pattern, a user may define the target pattern graphically on an input device, such that a search query for a specific pattern of interest may be entered much more efficiently and intuitively, reflecting the fact that the trained practitioner can express the pattern much more accurately in a pictorial form than by attempting to define by parameters. Since it is much more intuitive for a user to describe a pattern graphically than by a series of search parameters, it allows the required pattern to be submitted much more quickly and reliably than previous methods.

By converting the user input into a data structure for training a machine learning model, the specific graphical user input is used as training data to identify similar patterns in a large data set, providing much greater search accuracy than previous methods relying on fixed metric techniques like dynamic time warping and Euclidean distance. This also means the method is much more robust to data corruption and the presence of outliers and can be applied with greater efficacy to imperfect and/or noisy data. The method differs from the known methods in that specific training of the model is carried out for each pattern to be searched, based on the graphical input, meaning the model is trained to identify a specific pattern and provides much more accurate results.

In certain embodiments, the steps of the method are performed at a server, for example a remote server storing the machine learning model for training. In certain embodiments the steps are performed at a user terminal. In the latter embodiments, "receiving from a user terminal" may simply comprise receiving an input at a user interface of the user terminal where the steps of the method take place.

A data pattern is generally a pattern in the variation of a data value. In particular the variation in a data value may comprise a shape (a "data pattern"), for example the shape formed by the variation in a y coordinate across the x coordinate values. In some example a data pattern is the shape formed by a curve corresponding to an interval of graphical time series data. A data pattern may comprise a shape formed by a series of one or more maxima and/or minima. A data pattern may comprise a scale-less, unit-less or normalised data pattern, i.e. such that the pattern is not defined by absolute values but by relative changes in a data value forming the shape of the data pattern. A target pattern is a known data pattern to be found in a data set. A candidate pattern is a section of the data set identified by the machine learning model as exhibiting the target pattern shape within a predefined confidence level.

"Graphical data points" are data points extracted from a graphical depiction of the target pattern. They generally comprise a sequence of coordinates, e.g. (x, y) coordinates that can be plotted to form the target pattern. In some examples the graphical data points comprise unitless coordinates, for example simply on screen coordinates or (x, y) coordinates defined relative to the bounds of a GUI object representing a drawing area. In some examples the series of graphical data points comprises a portion of a data set exhibiting the target pattern and may have values representing physical quantities such as time, price etc. The series of graphical data points may be "open high low close" (OHLC) data comprising a y-axis range at every x-axis data point, i.e. a high value and a low value for each x-axis value.

The machine learning model is preferably a classifier algorithm, in particular a binary classifier for example a neural network. The machine learning model may be a detection algorithm, configured to identify a candidate pattern and its position within the data set, together with a confidence level of the detection. The data set is preferably a time series data set with the machine learning model applied to the time series data set to identifying intervals of time series data. The data structure may comprise a feature vector, e.g. a fixed size feature vector, for training the machine learning model. Features of the series of graphical data points may be computed and placed in the feature vector. Preferably the features are size invariant features. The trained machine learning model can be considered a database query which is used to return search results in the form of candidate patterns from a database.

The step of formulating a data structure for training a machine learning model may comprise: formulating a feature vector based on the series of graphical data points. The step may more particularly comprise: calculating a plurality of features, preferably size-invariant features, based on the series of graphical data points. Calculating a plurality of size-invariant features may comprise: creating a series of curves using the series of graphical data points, calculating a plurality of features of the curves using integration; forming a feature vector with the computed features. Creating a series of curves may comprise creating one or more curves which connect the maxima and/or minima within the series of graphical data points. Creating a series of curves may alternatively or additionally comprise creating one or more curves which connect the high and/or low values within the series of graphical data points, where the series of graphical data points comprise OHLC data points. By creating a series of curves in this way and calculating features, for example by calculating integrals, size-invariant features may be extracted from the series of graphical data points which are not affected by the size, magnitude or number of points in the series of graphical data points.

Preferably the method further comprises sending the one or more candidate patterns to a user terminal.

In certain embodiments of the invention the method further comprises: sending the one or more candidate patterns to a user terminal; receiving a selection of one or more of the plurality of candidate patterns; formulating one or more new data structures for training the machine learning model using each of the selected one or more candidate patterns; re-training the machine learning model using the one or more new data structures; applying the re-trained machine learning model to the data set to identify one or more new candidate patterns comprising intervals of the data set which are identified by the trained model as corresponding to the target pattern within a predefined confidence level.

In this way, the search can refined by both augmenting and refining the training data to re-train the machine learning model, while requiring a minimum of user input. Since a human can visually recognise a known pattern more accurately than they can define it graphically, by displaying a plurality of the candidate patterns to a user and re-training the model based on a selection of the closest matching candidate patterns, the search may be refined in a computationally and procedurally efficient manner.

Preferably the selection of one or more candidate patterns is a user selection. In some examples, the selection is an automatic selection for example using a matching algorithm such as a distance minimising algorithm.

Preferably the machine learning model is a classifier configured to classify intervals of data into a first class defining intervals of data which correspond to the target pattern within the predefined confidence level. Preferably the classifier is a binary classifier. The confidence level may be predefined within the model or may be based on a user selection received from the user terminal.

Preferably the method further comprises performing normalisation on the graphical data points received from the user terminal; formulating a data structure for training the machine learning model using the normalised graphical data points. In this case, the method is robust to different types of graphical data input.

Preferably the method further comprises performing data augmentation on the graphical data points to provide a plurality of series of graphical data points; formulating a plurality of data structures using the plurality of series of graphical data points; and training the machine learning model using the plurality of data structures. In this way, a single user input graphical representation can be augmented to provide additional training data to provide a more accurate model. The data augmentation may be carried out by applying a random displacement within a predefined magnitude to each graphical data point within the series of graphical data points to provide a transformed series of data points. This provides an efficient way to expand the training data set without departing from the characteristics of the target pattern.

In a second aspect of the invention there is provided a computer implemented method of inputting a search query for searching for a data pattern in a data set stored in a database, the method comprising the following steps performed at a user terminal: receiving, at a user interface of the user terminal, a user input comprising a graphical representation defining a target pattern to be searched; extracting a series of graphical data points from the user input; transmitting the data points to an untrained machine learning model, preferably stored on a server, to train the machine learning model; receiving, from the trained machine learning model, one or more candidate patterns comprising intervals of the data set identified as having a pattern corresponding to the target pattern within a predefined confidence level.

The graphical representation preferably comprises a shape defining the target pattern, for example a pictorial depiction, i.e. a graphical object, defining the target pattern. The shape may comprise the form of the target pattern itself or the shape may place restrictions on the form of the target pattern. The graphical representation may comprise a series of graphical data points which when displayed in graphical form show the target pattern. The graphical representation may comprise a section of a graph curve exhibiting the target pattern.

Extracting a series of graphical data points may comprise extracting all data points within the graphical representation or extracting a selection of data points within the graphical representation, for example, a periodic sampling of data points across the graphical representation.

The method may further comprise displaying the plurality of candidate patterns on a display of the user interface; receiving a selection of one or more of the displayed candidate patterns; extracting a series of graphical data points for each selected candidate pattern; sending the series of graphical data points to retrain the machine learning model; receiving, from the retrained machine learning model, one or more new candidate patterns comprising intervals of the data set identified as having a pattern corresponding to the target pattern within a predefined confidence level. Where the machine learning model is stored on a server, the series of graphical data points are sent to the server to train the machine learning model and the one or more new candidate patterns are received from the retrained machine learning model on the server.

In this way, the search is made more accurate by augmenting and refining the training data set to re-train the model by providing an efficient machine-human interface benefiting from the fact that a pattern can be more reliably visually recognised that pictorially defined.

The method may further comprise receiving a user selected confidence level at the user interface; displaying the plurality of candidate patterns identified within the selected confidence level within a predefined confidence level. In this way, a user can vary the number of candidate patterns displayed in the user interface from which the additional selection is made. This can account for any inaccuracies in the original graphical representation provided by relaxing the required confidence level to display patterns which are further from the graphical representation provided in order to find the required candidate patterns for re-training the model.

Receiving a user input comprising a graphical representation defining a target pattern to be searched may comprise receiving a selection of an interval of a data set having a target pattern to be searched. The user may select a portion of a data set which exhibits a data pattern corresponding to the target pattern and use this as the graphical representation to training the model.

Receiving a user input comprising a graphical representation defining a target pattern to be searched may comprise receiving a user-drawn graphical representation of a target pattern within a drawing area of the user interface. In particular this step may comprise receiving a graphical form in a drawing area, for example in a GUI object or a hardware input device, where the graphical form replicates the shape of the target pattern or places restrictions on the shape of the target pattern, such as restrictions on the amplitude, length or numbers of maxima or minima of the target pattern.

Receiving a user input may more specifically comprise displaying a drawing area on the user interface, the drawing area comprising a plurality of points which are moveable within the drawing area to create the graphical representation of the target pattern; receiving a series of graphical data points corresponding to the user selected positions of the points within the drawing area. The method may further comprise receiving a user selection of a number of moveable points to be used to create the graphical representation defining the target pattern; displaying a corresponding number of moveable points within the drawing area to be used to create the graphical representation of the target pattern.

The use of moveable points, or "nodes", to construct the graphical representation of the target pattern has a number of advantages. It provides an efficient and straightforward method to capture a target pattern. It also reduces significantly the dimension of the pattern space and facilitates efficient data augmentation techniques to expand the training data for the machine learning model. It also allows for visualisation of different types of transformations of the node positions which preserve the intended target pattern, ensuring the data augmentation can be carried out while not departing from the target pattern.

The above described aspects of the invention are preferably implemented on a distributed computing system with the method of the first aspect carried out on a server and the method of the second aspect carried out on a user terminal. However there is no limitation as to where specific method steps are performed and these could be distributed in any chosen arrangement around different components of a distributed computing system. Equally, all method steps could be carried out together on a single device, e.g. a user device (such as the user terminal).

In particular, in a further aspect of the invention there is provided a computer implemented method of formulating a database query for searching for a data pattern in a data set stored in a database, the method comprising the steps: receiving, at a user interface, a user input comprising a graphical representation defining a target pattern to be searched; extracting a series of graphical data points from the user input; formulating a data structure for training a machine learning model using the series of graphical data points; training a machine learning model using the data structure; applying the trained machine learning model to the data set stored in the database to identify one or more candidate patterns, the candidate patterns comprising intervals of the data set which correspond to the target pattern within a predefined confidence level.

Any of the additional method steps described above or set out in the appended claims may be introduced to the method according to the further aspect above.

In a further aspect of the method there is provided an apparatus or system comprising one or more processors configured to perform the steps of any method described above or set out in the appended claims.

In a further aspect of the method there is provided a computer readable medium comprising instructions which, when executed by a computer, cause the computer to carry out the steps of any method described above or set out in the appended claims.

### BRIEF DESCRIPTION OF THE DRAWINGS

Embodiments of the invention will now be described, by way of example only, with reference to the accompanying drawings, in which:
Figure 1 illustrates a method of formulating a database query for searching for a data pattern in a data set stored in a database;
Figure 2 illustrates additional method steps to the method of formulating a database query for searching for a data pattern in a data set stored in a database;
Figure 3 illustrates a method of inputting a search query for searching for a data pattern in a data set stored in a database;
Figure 4 illustrates additional steps to the method of inputting a search query for searching for a data pattern in a data set stored in a database;
Figure 5 illustrates a user interface for inputting a search query using a method according to the present invention;
Figures 6A to 6D illustrate a user interface for inputting a search query using a method according to the present invention;
Figures 7A and 7B illustrate a user interface for inputting a search query using a method according to the present invention;
Figure 8 schematically illustrates an apparatus according to the present invention.

### DETAILED DESCRIPTION

### Overview

The present invention relates to methods and apparatus for searching for a specific data pattern in a data set. The invention allows a user to input a known target data pattern in graphical form at a user interface, which is then processed to formulate a database query to search a data set to find portions of the data set that display a similar pattern. The user input is used to train a machine learning model which provides the database query to identify similar patterns in the data set stored on the database. In the following preferable embodiments, the invention is implemented in a distributed computing environment in which the user inputs a graphical representation of target pattern at a user terminal, which is then sent to train a machine learning model on a central server. However the method is not limited in how the method steps are distributed across nodes within the network and the entirety of the method can equally be carried out at a user terminal without requiring any modification.

### Method of formulating a database query performed at a server

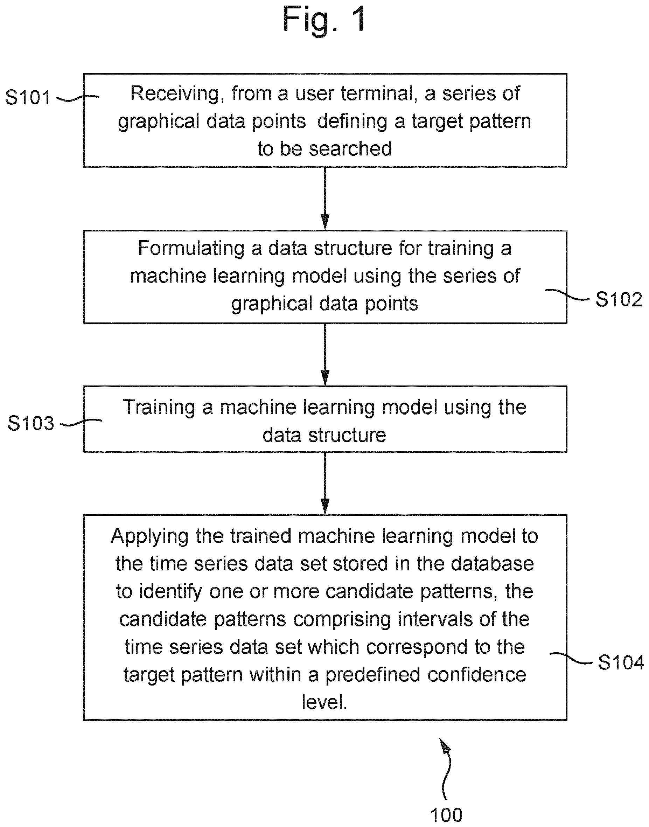

Figure 1 illustrates a computer implemented method 100 of formulating a database query for searching for a data pattern in a time series data set according to the present invention. In the present embodiment the computer implemented method 100 of Figure 1 is carried out at a server which hosts a machine learning model.

At step S101 the server receives a series of graphical data points defining a target pattern to be searched from a user terminal. Various means in which a user can input a graphical representation of a target pattern at a user interface are discussed below. However the graphical representation is entered at the user terminal, the server receives a series of graphical data points, for example (x, y) coordinates, which define the target pattern to be searched. As explained in detail below when discussing various ways in which the user can define the target pattern, the graphical data points may take a number of different forms but generally at least comprise two associated (x, y) values which can be graphically displayed to provide the target pattern.

One particular type of graphical data to which the method may be applied is Open-High-Low-Close (OHLC) Chart data wherein each data point on the x-axis comprises a y-axis range between a "high" value and "low" value. This type of data is commonly used to illustrate movements in the price of a financial instrument over time, where the range between the high and low values shows the price range over one unit of time. In this case each graphical data point comprises an x-value, e.g. a time or date indicating value and two y values indicating the high and low values.

At step S102 the server formulates a data structure for training a machine learning model using the graphical data points. In particular the method involves formulating training data using the series of graphical data points to train a machine learning model on the server. The machine learning model may be based on any known machine learning algorithm suitable for classifying data, for example a classifier algorithm such as a neural network.

The series of graphical data points received at the server is used to formulate a data structure for training the model to classify time series data into a class comprising intervals of time series data identified as displaying the target pattern within a predefined confidence level. Firstly, the graphical data points may be normalised, for example rescaling the data to provide the x and y values as values between 0 and 1. A series of data features are then computed on the normalised series of graphical data points to compute a feature vector which is then passed forward to the machine learning classifier in order to train it. The computed features are preferably size invariant features, which do not depend on the length of the series of graphical data points or the number of points within the series of graphical data points. In this way, the method is scale invariant and size of pattern invariant, meaning that size of the series of graphical data points on which the model is trained does not have any bearing on the size of data intervals returned by the trained algorithm. Instead the algorithm is trained to identify intervals of the data set which have the required pattern, irrespective of their length.

A specific way of computing such size and scale invariant features using the series of graphical data points is to first construct a series of open or closed curves using the graphical data points on which size invariant features are calculated. The representative curves may be calculated using the graphical data points in a number of different ways. For example, one such curve may be constructed by connecting local maxima and minima within the series of graphical data points. Another example is the construction of a closed curve going through all maxima in the series of data points from left to right and then going back through all the minima. In embodiments of the invention where the time series data is candlestick data, for example an open high low closed chart (OHLC) where each data point comprises a y axis range between a high and low value, the constructed curves may take into account the high and low data values. For example, curves may be created which pass through more high values in sequence and then back through all low values. This type of curve encodes two-dimensional information contained within the OHLC data and further enhances the ability of the classifying algorithm to identify sections of OHLC data that correspond to the target pattern.

Once the curves are constructed, the size-invariant features may be calculated based on the curves, for example by calculating integrals under the curves. Integration of the constructed curves provides features that are characteristic of the target pattern and provide good discrimination. Once calculated, the features are assembled into a feature vector which is passed to the machine learning classifier for training.

At step S103 the machine learning model is trained using the data structure. In particular, the feature vector is input to the classifying algorithm in order to train the algorithm to identify intervals of time series data which correspond the target pattern within a predefined confidence level.

In some embodiments of the invention, data augmentation is used to expand the input data to generate further data structures to train the machine learning model. For example, various transformations of the received series of graphical data points may be used to generate further series of graphical data points. Each further series of graphical data points may then be used to formulate further data structures in a similar way as explained above. One possibility for performing data augmentation on the received series of graphical data points is to provide a small random displacement to one or more of the graphical data points within the series. For example a transformation can be applied to each point such that it moves randomly within a circle of small radius centred on the original graphical data point. In other words, a random displacement within the xy plane is applied to each graphical data points where the displacement is within a predefined magnitude. In this way, one or more of the transformed additional series of data points are provided. In this way, the training data set for training the machine learning model may be significantly expanded to provide a more accurate classifier.

In step S104, the training machine learning model is applied to the time series data set stored in the database to identify one or more candidate patterns, where the candidate patterns comprise intervals of the stored time series data set which correspond to the target pattern within a predefined confidence level. The time series data set may either be stored locally with the machine learning model, with the user terminal or at a further remote location. Irrespective of the location of the database storing the time series data set, the stored time series data may either be sent to the trained machine learning model for classification or the trained model may be sent to the stored data and applied to identify the one or more candidate patterns.

The stored time series data set may be split into intervals of time series data of varying lengths which are then individually applied to the classifying algorithm in order to identify the closeness of match between the period of time series data and the target pattern. Splitting of the time series data set into intervals for classification may be achieved using heuristics regarding pattern size. For example, there may be a requirement for each interval to have a value of maxima and/or minima within a certain range. There may be an additional requirement for each interval to have a size value (i.e. length in number of data points) within a certain range. The time series data set may be spit into multiple overlapping intervals of different sizes. The ranges and requirements for the candidate intervals may be based on values taken from the input target pattern. The plurality of overlapping intervals of time series data are then classified by the trained model.

Each interval of time series data may be assigned a score that provides an indication of the confidence level of the match. In this way, after applying the trained machine learning model to the time series data set the model outputs one or more intervals of time series data with an associated "score" or confidence level indicating the closeness of the match. In some examples of the invention the model may assign each section of the stored time series data set with a score indicating the confidence in the match of that period of time series data to the target pattern. The outcome of method 100 therefore is one or more candidate patterns that comprise intervals of the scored time series data set together with an indication of the confidence level of the match to the target pattern.

The identified candidate patterns may then be sent to the user terminal to be displayed to the user at the user interface. In this way, a graphical representation of the target pattern input at the user terminal may be used to accurately and efficiently return one or more intervals of a stored time series data set, which correspond to the target pattern of interest.

Since the target pattern is input graphically, the search query is much closer to the intended known pattern to be searched, as a user is able to much more faithfully express a known pattern graphically rather than by using parameters. The method therefore provides a much more intuitive and accurate way of generating a search query for querying time series data stored in the database. Furthermore, using the graphical input to train a machine learning model provides much more robust results compared to known time-series query approaches, for example using fixed metric techniques like dynamic time warping (DTW) or Euclidean distance to evaluate how close the query and the subset of queried time-series are. The construction of a size invariant training data structure to train and apply a machine learning algorithm provides more accurate results which are more robust to data corruption and outliers.

The method is readily deployable in a number of different applications. For example it can be used by a clinical practitioner to rapidly search medical data to look for patterns indicative of certain health conditions. For example, in a hospital where electrocardiogram data is routinely taken from patients, a clinician can quickly input a particular data pattern indicative of a particular heart condition and search through historical cardiogram data to determine the number of times that the patient has displayed the indicative pattern and when these events occurred. The method may equally be used by a trader, needing to find data patterns indicative of trading opportunities in a large data set in real time.

### Refining the search by re-training the model

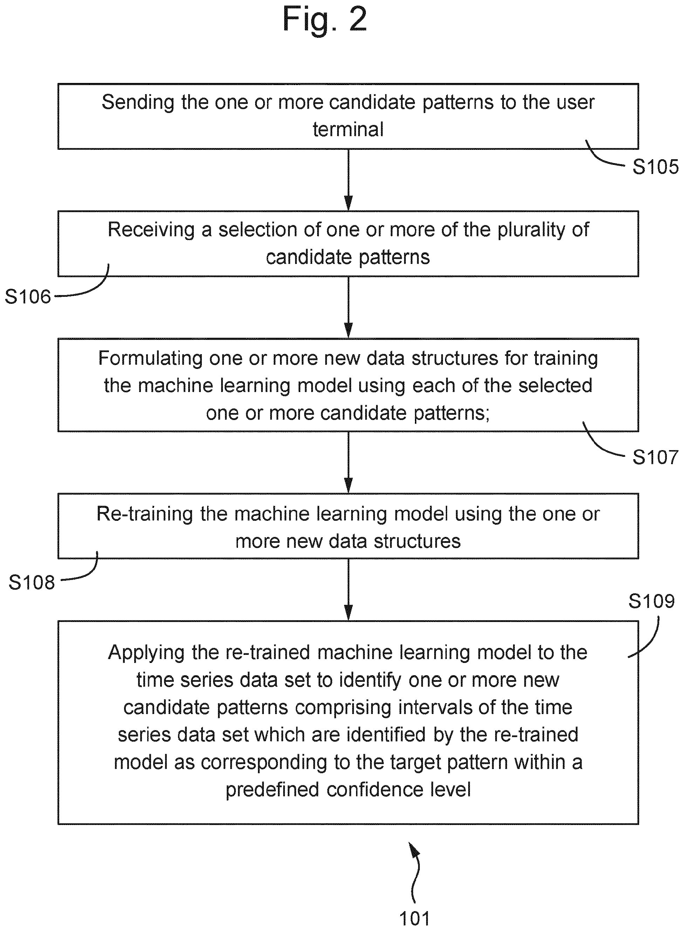

Figure 2 schematically illustrates an extension 201 to the method 200 of Figure 1 to allow for refining of the search for a target pattern within the time series data set stored in a database. In particular, in some embodiments of the method according to the present invention, a selection of one or more of the candidate patterns identified in the method of Figure 1 may be used to generate further data structures for training machine learning model in order to retrain the model with a refined training data set.

The refining steps of the method allow for simultaneous augmentation of the training data set and refining of the training data to more accurately train the model to return candidate patterns of interest, which is achieved computationally efficiently and in a single operator step. Although the method of Figure 1 can quickly and reliably return candidate patterns matching the target pattern, the additional steps of figure 2 can further refine the process.

A human can pictorially define a known data pattern much more precisely than they can describe it by parameters or features. However, the human operator can even more reliably and precisely recognise the known pattern visually compared to the precision with which it can be reproduced graphically. The methods of Figure 1 and Figure 2 together provide a user-machine interface that harnesses these facts to provide a highly efficient two stage process to augment and refine input training data to train a machine learning algorithm to very accurately search for a known pattern in a data set. Firstly, as described above with reference to Figure 1, a target pattern is defined graphically to initially input the target pattern to provide a first "coarse" step to rapidly arrive close to the required known pattern, which may be sufficient for many applications. The method of Figure 2 then displays multiple candidate patterns to the user to allow for a "fine" adjustment of the training data using selection of a subgroup of candidate patterns, which are closest to the intended pattern, to re-train the model.

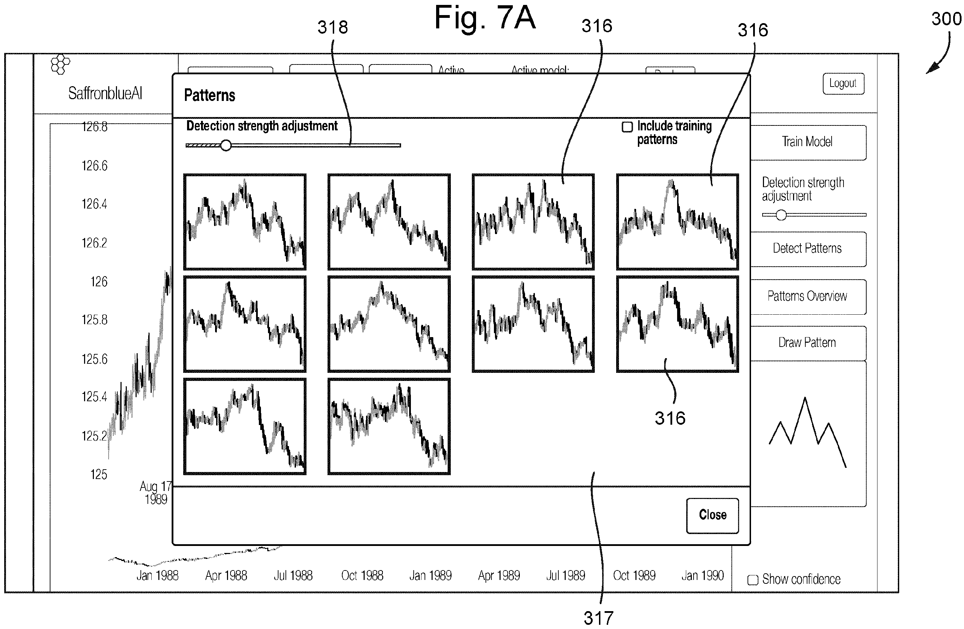

Firstly, in step S105 the one or more candidate patterns identified using method 200 of Figure 1 are sent to the user terminal to be displayed to the user. A user interface implementing this step is illustrated in Figure 7A. In this way, the user can view the candidate patterns and refine the model by choosing selected candidate patterns within the returned total number of candidate patterns which are closer to the desired target pattern.

In step S106 the server receives a selection of one or more of the plurality of candidate patterns returned by the method of Figure 1 sent to the user terminal. The selection of the one or more of the plurality of candidate patterns may be sent in the form of a series of graphical data points for each candidate pattern or simply an indication of the candidate patterns, for example by a numerical identifier, used to identify the candidate patterns stored on the server.

In step S107 one or more new data structures for training the machine learning model are formulated using each of the selected one or more candidate patterns. In particular, a series of graphical data points may be extracted from each of the selected candidate patterns with a data structure formulated using each series of data points as described above under Figure 1. The graphical data points extracted from the selected candidate patterns may comprise all data points within the section of time series data making up a candidate pattern or a selection of data points across the period of time series data comprising the candidate pattern, i.e. a sampling of the data points across the candidate pattern.

A feature vector is then formulated based on each candidate pattern as described above. In particular, scale and size invariant features are extracted from each to form the fixed length feature vectors. In this way, refined training data is created to retrain the machine learning model to more accurately identify target patterns according to the user's preference.

In step S108 the machine learning model is retrained using the one or more new data structures based on the candidate patterns. As described above, the new feature vectors are passed through the classifier to retrain the algorithm to more accurately classify sections of time series data according to the selected candidate patterns.

In section S109, once the machine learning model has been retrained, it is applied to the stored time series data set to identify one or more new candidate patterns comprising intervals of time series data which are identified by the retrained model as corresponding to the target pattern within a predefined confidence level. The application of the retrain machine learning model in step S109 is exactly as described above in step 104. In particular, the stored time series data is split into intervals which are passed through the classifier to assign them a score indicative of the confidence in the match with the target pattern.

The new candidate patterns may then be sent to the user terminal for display to the user. Steps S105 to S109 of Figure 2 may be iterated to allow the user to repeatedly retrain the model to optimise it to identify candidate patterns closer to the desired target pattern. The training and retraining of the model may be achieved using the same or different data sets and the trained model may be applied to a different data set to search for a target pattern.

### Method of inputting a search query performed at the user terminal

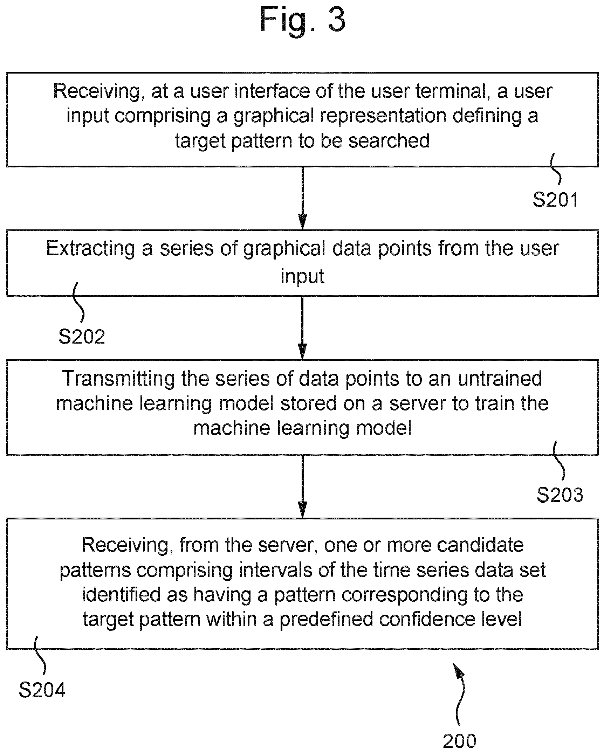

As described above, the first step in the method 100, 101 of formulating a database query performed at the server is to receive, from a user terminal, a series of graphical data points (e.g. coordinates) defining a target pattern to be searched. Figure 3 illustrates the corresponding method 200 performed at the user terminal, defining the process in which the search query is entered by inputting a graphical representation of the target pattern to be searched in the time series data set.

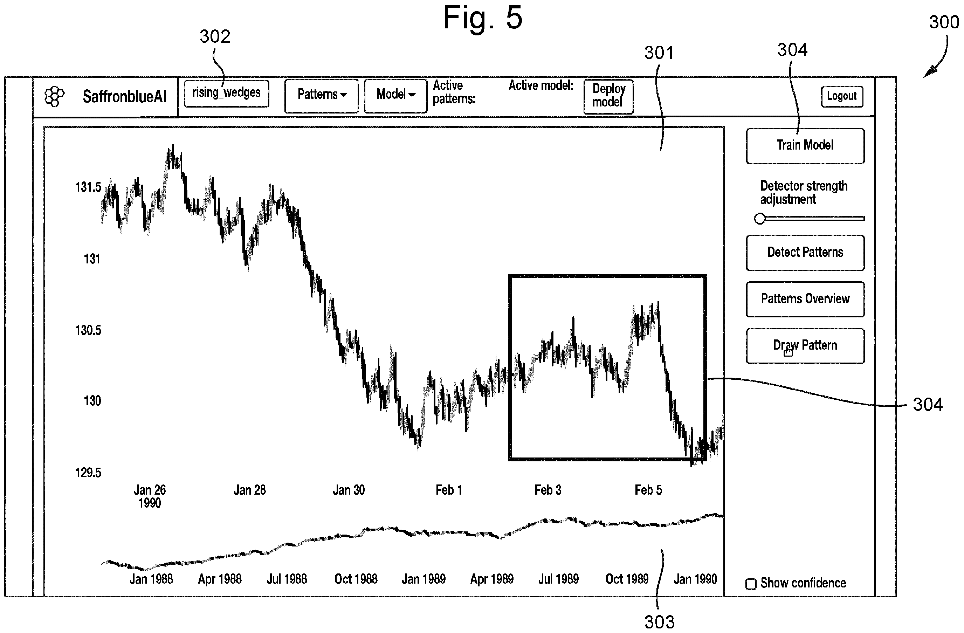

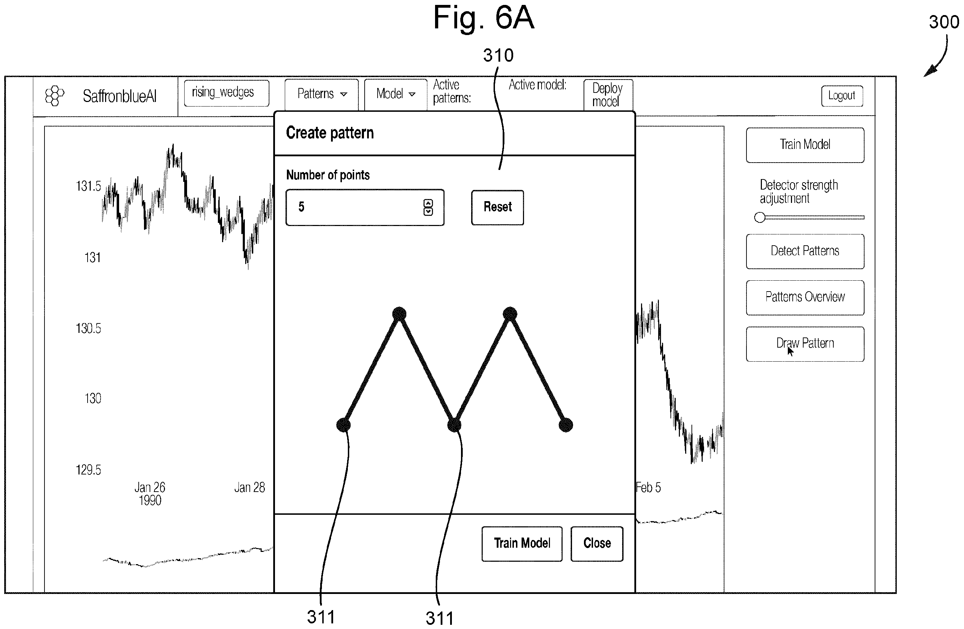

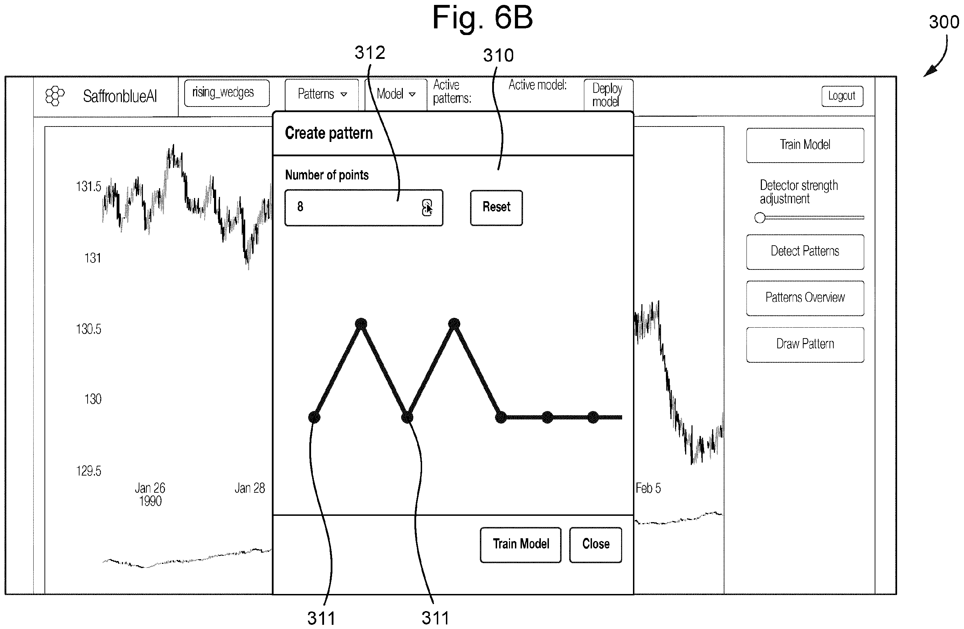

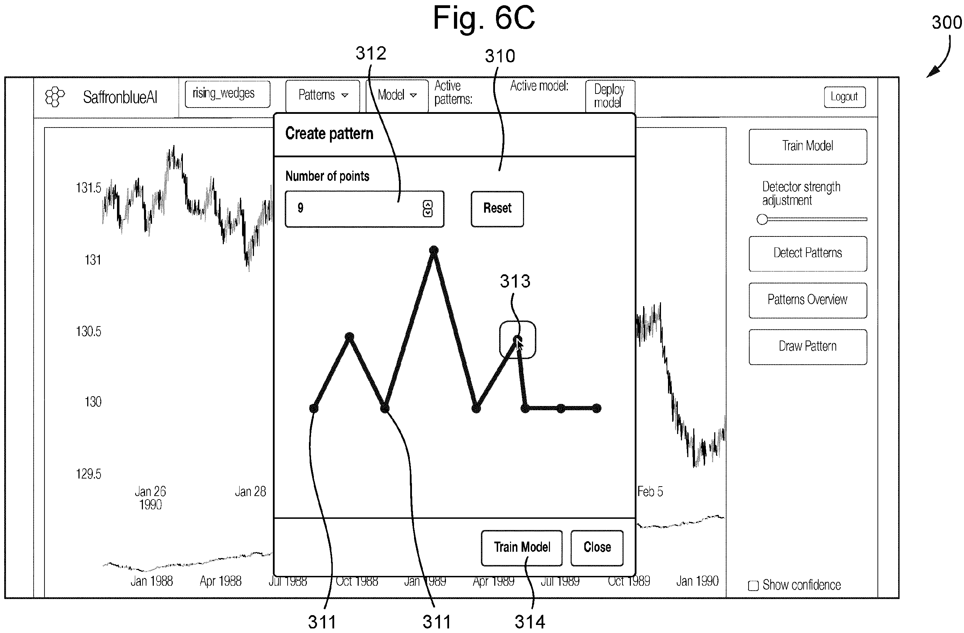

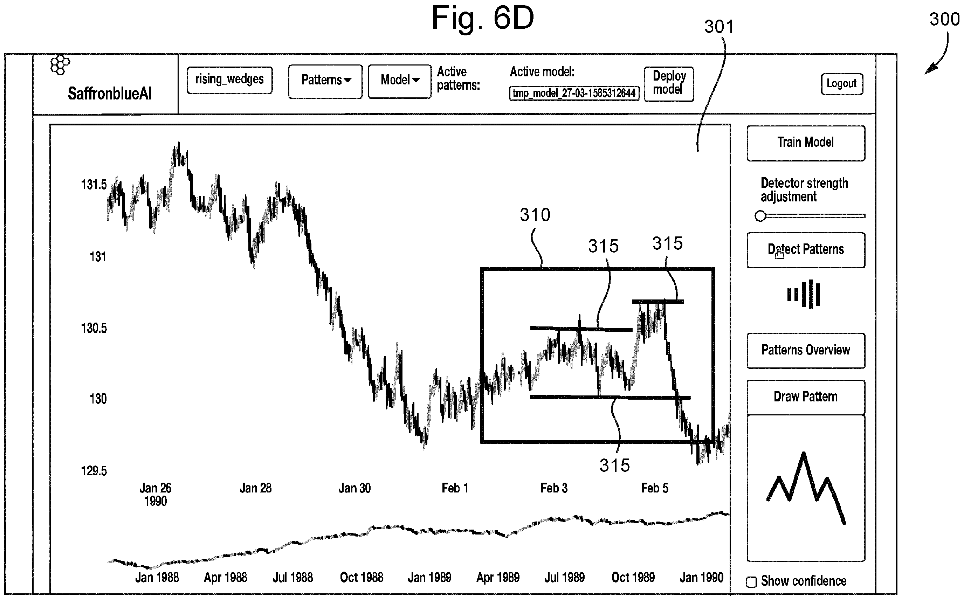

The first step S201 is receiving, at a user interface of the user terminal, a user input comprising a graphical representation defining a target pattern to be searched. In particular the user interface is configured to receive an input from a user comprising a graphical representation of the target pattern to be searched. This graphical representation may take a number of different forms and may be input in a number of different ways, as described in more detail below and illustrated in Figures 5 and 6. However, the input always comprises a graphical, i.e. pictorial illustration, defining the target pattern to be searched.

Since it is much more intuitive for a user to define a known pattern graphically, rather than attempting to define it by parameters, the process of entering the target data pattern is greatly simplified and the search query is a more accurate definition of the target pattern compared to other input techniques.

As will be described in more detail below and illustrated in Figure 6, the user interface may comprise a drawing area in which the user can draw the graphical representation of the target pattern to be searched. The drawing area may be provided by a portion of a display area in which the user can draw the pattern using an appropriate input device, such as a mouse, to draw the shape of the data pattern. In other examples, the drawing area may be provided by another form of hardware such as a graphic tablet and stylus. The drawing area may be scale free as it is just the graphical representation of the pattern shape, rather than any specific value of the graphical data points, which is required for the method.

In some examples, as will be described, the drawing area may be configured to allow the user to draw shapes or annotations which define limits to the target pattern form, rather than drawing the full pattern shape. For example, the user may draw a series of lines which define a "channel", restricting the maximum and minimum values of the data pattern over the entirety of the pattern or over portions of the pattern. This type of input is described below with reference to Figure 6D.

The user interface may also comprise functionality to input the graphical representation by other methods. For example, the user interface may be configured to allow a user to select a portion of a time series data set that exhibits a pattern corresponding to the target pattern of interest. In this case, the graphical representation is a selection of graphically displayed data, which defines the target pattern to be searched. Again, this input method provides a more efficient human machine interaction by benefitting from the increased intuitive nature in which a known pattern can be visually recognised and selected, rather than attempting to define it by parameters.

In step S202 a series of graphical data points are extracted from the user input comprising the graphical representation defining the target pattern. The graphical data points are data points, i.e. coordinates, on the graphical representation. The graphical representation will typically comprise a plurality of graphical data points in the shape of the target pattern (or in a shape defining limits to the target pattern). For example, when the graphical representation is input by a user drawing a shape defining the graphical representation in a drawing area, the shape will comprise a plurality of coordinates. These coordinates may be defined relative to the bounds of the drawing area. Where the drawing area is a portion of the display, i.e. a GUI object representing the drawing area, the graphical data points may be (x, y) coordinates defined relative to the bounds of the GUI object.

Similarly, where the graphical representation is input by selecting a portion of existing time series data being displayed at the user interface, the graphical representation comprises a series of graphical data points, i.e. the time series data points within the selection being displayed. These data points may be simply (x, y) coordinates or contain further information such as OHLC data with low high values. This input method differs from the drawing input method in that the graphical data points may be actual data with values representing real physical values, rather than simply unit-less coordinates, but this has no effect on the method. The important factor is the relative positions of the graphical data points such that they define the target pattern to be searched. In any case, normalisation may be performed on the extracted graphical data points, either after transmission to the server as described above, or at the user terminal prior to transmission.

Extracting a series of graphical data points form the user input may simply comprise taking all graphical data points from the graphical representation, i.e. obtaining every coordinate formin the graphical representation and sending this series of graphical data points to the server. In other examples, only a selection of the data points may be extracted for transmission to the machine learning model for training. For example the graphical representation may be sampled to extract only a selection of data points across the graphical representation, for example a periodic selection of data points (e.g. every other, every fifth data point etc.) from the graphical representation which preserve the target pattern. The method 100 of formulating the database query described above is robust to series' of data points of different lengths.

In step S203 the extracted series of data points is sent to an untrained machine learning model to train the machine learning model. As described above, in the present embodiment, the machine learning model is stored centrally on a server but clearly the method could be implemented equally with the machine learning model stored locally. Similarly, in the present embodiment implemented on a distributed computing system, the series of graphical data points are transmitted to the server and the formulation of the data structure for training the machine learning model takes place at the server. However, the formulation of the data structure may be carried out at the user terminal and the training data structure then sent to the model for training.

At step S204, the terminal receives, from the server, one or more candidate patterns comprising intervals of the time series data set identified as having a pattern corresponding to the target pattern within a predefined confidence level. In particular, the trained machine learning model is applied to the data set stored on the database to output one or more intervals of the time series data which exhibit a pattern corresponding to the target pattern within a predefined confidence level. In this example, training of the machine learning model and application of the trained model to the stored data set takes place at the server and the output is sent to the user terminal.

The candidate patterns each comprise a section of the data set which has been classified by the trained machine learning model as matching the graphical representation of the target pattern. The machine learning model may provide each candidate pattern with a score indicating a confidence level in the match, i.e. indicating a pattern match quality. The candidate patterns may therefore comprise a section of the stored time series data together with a score, i.e. a confidence value. In some examples, the terminal receives all candidate patterns which have a score above a pre-defined threshold value.

The user interface may comprise a confidence level input configured such that a user can input an indication of a required confidence level. The input confidence level may be sent to the machine learning model, i.e. to the server in this example, such that only candidate patterns within the specified confidence level are sent to the user terminal. In other examples, all candidate patterns within a first confidence level value are sent to the user terminal. The user can then vary a second confidence level value, within the range of the first confidence level value, to determine which candidate patterns are displayed on a display of the user interface. That is, a larger number of candidate patterns are sent to the user terminal (i.e. all candidate patterns within a first lower confidence level) and the user can decide to only display a selection of the best matching candidate patterns on the user interface (for example by selecting a variable second higher confidence level to only display a subsection of the best matching candidate patterns within transmitted candidate patterns).

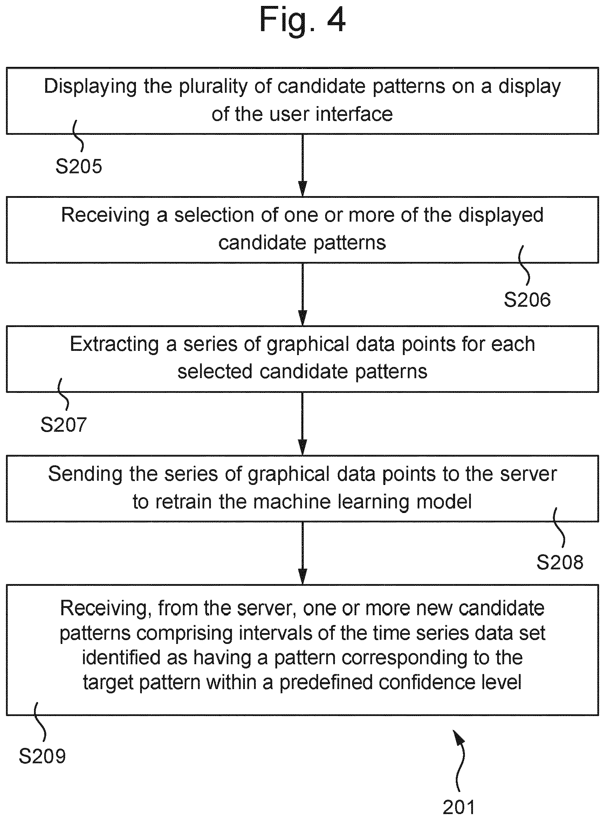

Figure 4 illustrates an extension to the method 200 of Figure 3 in which the search can be optimised by allowing a refining of the input target pattern. This is analogous to the method of Figure 2 providing the user input steps which provide an improved user-machine interaction by harnessing the objective fact that humans can visually recognise patterns to a greater success than they can visually depict them. It further allows expansion of the training data set used to train the machine learning algorithm, while ensuring the efficacy of the training data, to improve the accuracy of the search for the target pattern, as will be described.

As described above, at step S205 a plurality of candidate patterns identified by the machine learning model are displayed to the user on a display of the user interface. In particular, the candidate patterns identified as corresponding to the target pattern within the predefined confidence level may be displayed in a grid form in a display of the user interface as shown in Figure 7A. As described above, the user interface may comprise an input configured to receive a required confidence level and candidate patterns identified within this confidence level are displayed on the user interface. The confidence level input may be variable to adjust the number of candidate patterns displayed. For example the confidence level input may comprise a sliding scale to allow the user to adjust the confidence to display a required number of candidate patterns on the display for comparison.

At step S206 the user terminal receives a selection of one or more of the displayed candidate patterns. The user interface may be configured such that the user can select candidate patterns using an input device such as a touch screen or mouse to select one or more of the displayed candidate patterns. In this way, a user may select a sub-group of the initially returned candidate patterns which are closest to the target data pattern of interest. These selected candidate patterns may then be used as additional training data for the machine learning algorithm, as described below.

Although in this preferable embodiment the selection of the closest matching patterns is made by a user, benefiting from an optimised machine-user interaction by harnessing a visual user recognition to identify patterns to expand the training data, in other embodiments the selection may be made automatically. For example a simple matching algorithm may be applied, for example based on least squares or minimum distance matching, to select the closest matching candidate patterns to be converted to additional training data to train the algorithm.

At step S207 a series of graphical data points are extracted for each of the selected candidate patterns. The extract of data points may be as described above with reference to step S202 of method 200.

At step S208 each of the series of graphical data points corresponding to the selected candidate patterns is sent to the machine learning model to re-train the machine learning model as described in steps S106 to S109 of method 101 described above.

At step S209 the user terminal receives the one or more new candidate patterns from the re-trained machine learning model on the server. As before, the one or more new patterns may be displayed on a display of the user interface. In this way the user can rapidly identify sections of the stored data set exhibiting the pattern of interest. If needed steps S205 - S209 can be iterated to further optimise the training data to more accurately identify patterns of interest. In some examples of the invention steps S201 - S209 could be applied to a first data set or subsection of a full data set and then once the model is trained it could be applied to a second data set or the full data set. In this way, the data could be trained on a small data set before being applied on a larger data set to identify patterns of interest.

As previously emphasised, although in this example the method 201 is implemented in a distributed computing environment with the training and application of the model taking place separately to the inputting of the search query and display of the results, these steps could equally all be performed at the user terminal. In this case, step S208 and S209 would be replaced with steps S101 - S104 from the method 100 of Figure 1.

As described above, the user may input the graphical representation of a target pattern in a number of different ways, as will now be described with reference to an exemplary user interface according to the present invention

### The user interface - receiving a user input

Figure 5 illustrates a user interface 300, i.e. a graphical user interface (GUI), implemented on a user terminal according to the present invention. The user interface may be web-hosted and accessed by a user using a user terminal.

The user interface 300 of this embodiment comprises a main graphical display area 301 for displaying time series data in graphical form, i.e. a graph visually displaying time series data. The user interface may comprise a data set selection input 302 allowing a user to select a data set to load with the user interface. The data set may be stored in a local memory at the user terminal or accessible in a remote database.

The main display area 301 may display a selected portion of the data set and the user interface 200 may additionally comprise a secondary display area 303 which shows a wide range of the data. In particular, when applied to time series data, the secondary display area 303 displays a longer period of the data (or the entirety of the data set) and the main display area 301 displays an enlarged section of the data set. In this way a user can navigate within the data set using the secondary display area 303 to select a portion of the data to display in the main display area 301 in order to identify patterns within the data set.

The graphical representation of a data pattern to be searched may be input in a number of different ways. In the example of Figure 5 the graphical representation is defined by selecting an interval of the time series data set having a target pattern to be searched. In particular, a selection box 304 is used to bound a region of the displayed graphical data which exhibits a target data pattern to be searched within the wider data set. Once the selection of a graphical representation of the target pattern is made, the graphical representation is input, in this case by selecting the "train model" function 304.

The above described method steps is then implemented by extracting a series of data points from the selected interval of time series data (step S202), formulating a data structure using the series of data points and training the untrained machine learning model using the data structure (S102 - S104). These steps may be performed locally on the user terminal or may be distributed across different nodes within a distributed computing environment.

In the present example, the displayed data is open high low close (OHLC) data ("candlestick" data) where each graphical data point includes an x-axis value a y-axis range between a low value and a high value. In this case, the series of graphical data points extracted may include the high and low value y-axis values and the data structure for training the algorithm can utilise this additional information to improve training of the algorithm to provide an improved search for the pattern. In alternative examples, the extracting the series of graphical data points from the selection of OHLC data may include taking a midpoint value at the midpoint of the high low value range as the y-value such that the series of graphical data point comprise standard x, y coordinates and the formulation of the data structure may be based on these values.

Figure 6A to 6C illustrate an alternative or additional feature of the user interface 300 for inputting a graphical representation of a target pattern to be searched. Figure 6A shows a drawing area 310 displayed on the user interface 300 which is configured to receive a user-drawn graphical representation of a target pattern. In this case the drawing area comprises a GUI object displayed on the display of the user terminal, allowing a user to draw a target pattern using a suitable input, such as a touchpad, touchscreen or mouse.

The drawing area is configured to allow a user to draw the graphical representation within the drawing area and input the drawn pattern to be used to train the machine learning model. In particular, when the user inputs the drawn pattern, in this case by selecting "train model", a series of graphical data points are extracted from the drawing which are then used to formulate the data structure for training the model. The graphical data points may be extracted as (x, y) coordinates relative to the bounds of the drawing area and used to formulate the data structure and train the algorithm as described above. In some examples of the invention, the user can input a free hand drawing, e.g. using a mouse, a stylus or a touchscreen, and the graphical data points are extracted from the free hand drawing, by either extracting all graphical data points within the freehand drawing or by extracting a sampling of graphical data points across the drawn shape. In either case, a feature vector may be constructed based on the extracted graphical data points and used to train the model as described above.

Figure 6A illustrates a particularly preferable graphical input method in which the drawing area comprises a plurality of moveable points or "nodes" 311, which are moveable within the drawing area 310 to draw the graphical representation of the target pattern. The user interface is configured to allow the user to move each node 311 within the drawing area 310 using an input, such as a touch screen, mouse or stylus, to arrange the nodes 311 into a sequential arrangement providing the graphical representation of the target pattern. Neighbouring moveable nodes 311 in the sequence may be connected by straight lines to aid visualisation of the target pattern shape. Once the graphical representation of the target pattern has been drawn by arranging the nodes 311, the graphical representation is inputted, in this case by selecting "train model". A series of graphical data points are extracted from the drawn pattern and used to formulate a data structure for training the model as described above. In particular, the graphical data points may correspond to the coordinates of the nodes 311 in the drawing area 310, for example relative to the bounds of the drawing area 310.

The drawing of a data pattern using moveable points or nodes 311 within a drawing area has a number of advantages. Firstly, the dimension of the pattern space is significantly reduced. As a result, it is possible to efficiently implement a number of data augmentation techniques to expand the training data to be used to train the model. One of many examples of such an efficient data augmentation process is by applying random displacements in the x and y directions to each node to form a transformed series of graphical data points.

This process can be repeated to provide a large number of transformed series of graphical data points which retain the character of the target pattern. Each of the transformed series of graphical data points can then be used to formulate a data structure for training the algorithm. Other data augmentation techniques relying on alternative transformations of the coordinates of the nodes 311 can be used in a similar way.

A further important advantage is that this graphical representation input method allows for visualisation of different transformations, for the purpose of data augmentation, which preserve the target pattern. Therefore the training data can be expanded without departing from the intended target pattern meaning that an accurate classifier can be trained on the basis of a single user input. This improves the speed and ease of use and is particularly advantageous when the user interface is used in real time to identify patterns where the time to obtain a result is critical.

The use of moveable nodes 311 to draw the pattern also allows a user to draw several examples of the target pattern in a straightforward manner by slightly modifying the drawn shape. This allows the user to provide multiple examples, where each can be used as training data for the algorithm as explained above, thus increasing the accuracy of the trained machine learning model. This input method also allows for easy correction of any mistakes during drawing of the pattern.

Figure 6B illustrates additional functionality of the drawing area of the user interface 300. The user interface may further comprise a number of nodes input 312 for inputting a number moveable nodes 311 to be displayed in the drawing area and used to create the pattern. As shown in Figure 6B, in this example the number of nodes 311 is increased to 8 in the "number of points" selection input 312 and then 8 moveable nodes 311 are provided within the drawing area 310. This allows a user to choose the number of nodes required to construct target patterns of varying complexity.

As shown in Figure 6C, once the required number of nodes has been selected, the cursor 313 is used to click and drag the nodes to arrange them to form the graphical representation of the target pattern to be input as the search query. The user then selects the "train model" function 314 and the graphical representation in the drawing area is input, as described in method step S201, with the positions of the nodes within the drawing area extracted as the series of graphical data points (step S202) used to formulate the data structure (step S102).

The user-drawn graphical representation input method may be extended with a number of features. Firstly, although in Figure 6, the drawing area comprises simply a uniform empty background on which the moveable nodes 311 are arranged, in some examples of the invention the drawing area 310 may be overlaid on existing data displayed in the user interface 300. In this way, the user drawn graphical representation may be arranged against real time series data displayed in the user interface. This allows a user to construct a pattern using a particular data pattern within the time series data set as a guide. For example, a portion of the time series data set may be displayed graphically in the main display area 301, shown in Figure 5. The drawing area 310 may have a transparent background and may be overlaid on the main display area 301 such that a pattern can be drawn, superposed, on the data below. The user can then mimic pattern shapes in the existing data or alter them in the drawn pattern.

The user interface may also comprise a function whereby, when a graphical representation of a target pattern is drawn overlaid on a displayed portion of time series data, when extracting the graphical data points from the user input, information from the displayed time series data below may also be extracted. For example, if the displayed data is OHLC data, low and high values of the data points may also be extracted from the portion on which the drawn pattern is overlaid and the low and high values may be used in formulating the data structures for training the model.

The user interface may further be configured to accept other types of user drawn graphical representations defining target patterns. The user-drawn graphical representations in Figure 6A to 6C indicate a target pattern in the shape of plotted time series data. That is, the graphical representation is itself intended to provide the target pattern to be searched. The user input may further be configured to receive a graphical representation in other forms. For example the user can input lines and other geometrical primitives which define restrictions on the target pattern. For example a user may draw a pair of lines which indicate the upper and lower limits to the variation in the data value over a portion of the target pattern.

Figure 6D shows a user interface 300 in which a transparent drawing area 310 is overlaid over the main data display area 301. The user can draw primitives 315 to annotate the underlying displayed time series data to define aspects of the target pattern, in this case indicating that the amplitude of variation in the target pattern should be limited to a first value in a first section of the target patter and limited to a larger second value in a second section of the target pattern. Therefore in this input method, the graphical representation does not replicate the target pattern itself but asserts restrictions defining the shape of the target pattern.

This type of graphical representation can be used to formulate a search query in exactly the same way. Firstly a series of graphical data points are extracted, for example from the lines 315 in Figure 6D, and these are used to formulate a data structure for training an algorithm. For example, as described above, curves may constructed initially using the extracted data points after which features may be computed, for example integrals under the curves, and assembled in a feature vector for training the machine learning model.

These type of primitives may also be used together with a graphical representation of the target data pattern itself (either selected from data or drawn). For example, in Figure 6D, the inputted graphical representation defining the target pattern may comprise both the interval of time series data selected by area 310 together with the primitives 315 which provide additional target features of target pattern. In this case, graphical data points are extracted from both the selected interval of time series data and from the primitives 315.

These graphical data points are then used to formulate a data structure for training the machine learning model as described above. For example, one such curves could be a closed curve drawn which passes through all maxima in the graphical data points of the pattern and then passes back through the data points of the upper line. A similar closed curve could be constructed with the lower line and mimima. Features are then calculated on the curves as described above which taken into account characteristics of the selected data pattern and the additional annotated lines 315.

### The user interface - displaying results and re-training the model

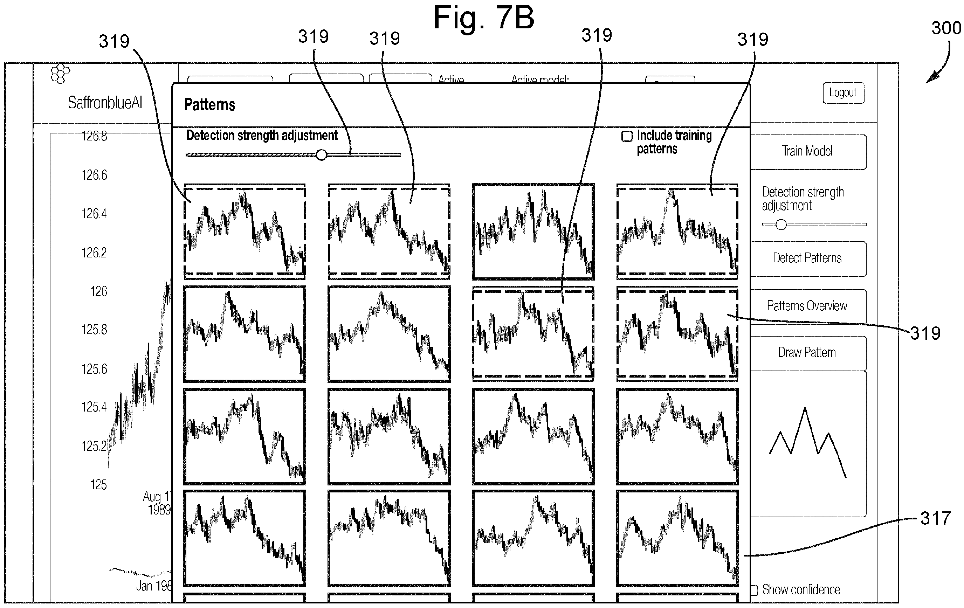

Methods 101, 102 of optimising the training of the model were described above with reference to Figures 2 and 4. The implementation of these methods using a user interface 300 at a user terminal will now be described with reference to Figure 7A and 7B.

As described above with reference to methods 100, 200 illustrated in Figures 1 and 3, the machine learning model is trained using a user input comprising a graphical representation defining a target pattern and then applied to a data set to return one or more candidate patterns comprising intervals of the time series data set identified as having a pattern corresponding to the target pattern within a predefined confidence level. If the training and application of the machine learning model take place remotely and not on the user terminal, the candidate patterns are then sent to the user terminal.

The candidate patterns 316 are then displayed on a results display area 317 of the user interface 300, as shown in Figure 7A. The candidate patterns 316 are preferably displayed in a grid format such that they are easily comparable. As described above, the trained model may assign each pattern a score indicating a confidence level in the match. The user interface 300 may display only those patterns 316 having a confidence level within a predefined threshold, to only display the candidate patterns 316 identified as having the best match. The user interface 300 may additionally comprise a confidence level input 318 for adjusting the confidence level threshold determining the candidate patterns 316 that are displayed. This is illustrated in Figure 7B in which the confidence level input 318 is adjusted to reduce the required confidence level for a candidate pattern 316 to be displayed such that a greater number of candidate patterns are displayed in the results screen 317.

As described with reference to Figure 4, the user interface is configured to allow the user to select a subgroup of candidate patterns 316 to use to retrain the machine learning model. The selection may be used using any suitable input device such as a touchscreen or mouse. Figure 7B illustrates a group of 5 selected candidate patterns 319 to be used to formulate data structures to retrain the algorithm. Once the selection is input into the user interface 300 graphical data points are extracted from the candidate patterns, new training data structures are formulated and the model is retrained and applied to a data set to search for intervals of the data displaying the target pattern (as described in method steps S107 - S109 above).

This illustrates how the user interface of Figure 7 and the associated method solve a problem of augmenting and refining the input training data while minimising the degree of further operator input or data processing requirement. A human can pictorially define a known data pattern much more precisely than they can describe it by parameters or features. However, they can even more readily and precisely visually recognise the known pattern than they can draw it. The methods of Figure 2 and 4, implemented with the user interface 300 of Figure 7, provide a user-machine interface which harnesses these facts to provide a highly efficient two stage process to construct appropriate training data to train a machine learning algorithm to very accurately search for a known pattern in a data set. Firstly, a target pattern is defined graphically to initially input the target pattern to provide a first "coarse" step to rapidly arrive close to the required known pattern. The method then displays multiple candidate patterns to the user to allow for a "fine" adjustment using selection of a subgroup of candidate patterns which are closest to the intended pattern. In these two steps the user has created sufficient training data to create an efficient and accurate classifier which can then be applied to a data set to accurately return intervals of the data displaying the pattern.

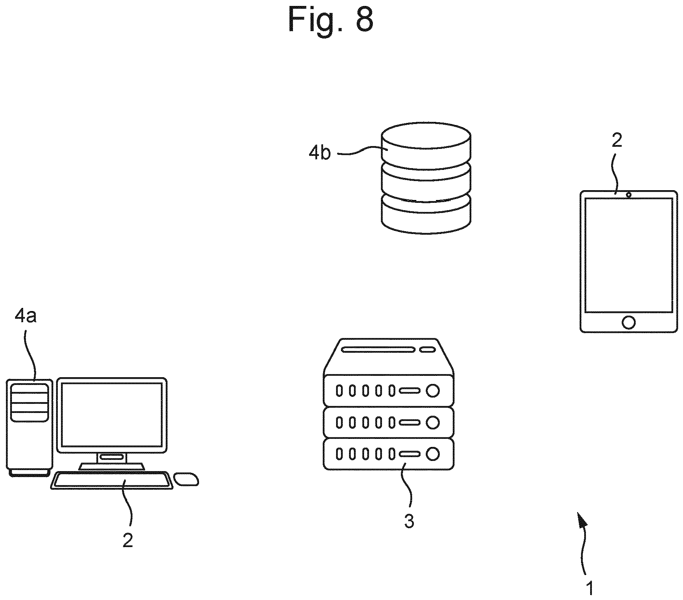

Fig 8 illustrates a system 1 according to the present invention which includes one or more user terminals 2, a central server 3 and one or more databases 4 storing a data set to be searched.

In certain embodiments of the invention, the methods are implemented in a distributed computing environment. In particular, the methods 100, 101 of Figure 1 and 2 are implemented at a user terminal 2, where the search query is inputted, and the methods 200, 201 of Figure 3 and 4 are implemented at a remote server 3. The data set to be searched may be stored in a local database 4a or a remote database 4b to which the user terminal 2 and/or server 3 are connected. The user interface 300 may be web-hosted such that the user connects to a website to view and use the interface 300. The machine learning model is hosted on the server 3, where training of the model takes place. The trained model can be sent to the database 4b to be applied to the stored data set or the data can be sent to the server 3.

It will be appreciated that all method steps could just as readily be implemented in the same location. For example, all method steps could be carried out locally at a user terminal 2 which hosts the user interface 300, the machine learning model and stores the data set. Similarly the method steps could be distributed in different ways around the components of the network. For example the formulation of the data structure could take place on the user terminal 2 before being sent to the server 3 to train the model.

## Claims

1. A computer implemented method of formulating a database query for searching for a data pattern in a time series data set stored in a database, the method comprising the following steps:
receiving, from a user terminal, a series of graphical data points defining a target pattern to be searched;
formulating a data structure for training a machine learning model using the series of graphical data points;
training a machine learning model using the data structure;
applying the trained machine learning model to the time series data set stored in the database to identify one or more candidate patterns, the candidate patterns comprising intervals of the time series data set which correspond to the target pattern within a predefined confidence level.

2. The method of claim 1 further comprising:
sending the one or more candidate patterns to the user terminal;
receiving a selection of one or more of the plurality of candidate patterns;
formulating one or more new data structures for training the machine learning model using each of the selected one or more candidate patterns;
re-training the machine learning model using the one or more new data structures;
applying the re-trained machine learning model to the time series data set to identify one or more new candidate patterns comprising intervals of the time series data set which are identified by the trained model as corresponding to the target pattern within a predefined confidence level.

3. The method of claims 1 or 2 wherein the machine learning model is a classifier configured to classify intervals of data into a first class defining intervals of data which correspond to the target pattern within the predefined confidence level.

4. The method of any of claims 1 to 3 further comprising:
performing normalisation on the graphical data points received from the user terminal;
formulating a data structure for training the machine learning model using the normalised graphical data points.

5. The method of any of claims 1 to 4 further comprising:
performing data augmentation on the graphical data points to provide a plurality of series of graphical data points;
formulating a plurality of data structures using the plurality of series of graphical data points;
training the machine learning model using the plurality of data structures.

6. The method of claim 5 wherein performing data augmentation comprises:
applying a random displacement within a predefined magnitude to each graphical data point within the series of graphical data points to provide a transformed series of data points.

7. A computer implemented method of inputting a search query for searching for a data pattern in a time series data set stored in a database, the method comprising the following steps performed at a user terminal:
receiving, at a user interface of the user terminal, a user input comprising a graphical representation defining a target pattern to be searched;
extracting a series of graphical data points from the user input;
transmitting the data points to an untrained machine learning model to train the machine learning model;
receiving, from the trained machine learning model, one or more candidate patterns comprising intervals of the time series data set identified as having a pattern corresponding to the target pattern within a predefined confidence level.

8. The method of claim 7 further comprising:
displaying the plurality of candidate patterns on a display of the user interface;
receiving a selection of one or more of the displayed candidate patterns;
extracting a series of graphical data points for each selected candidate pattern;
sending the series of graphical data points to retrain the machine learning model;
receiving, from the retrained machine learning model, one or more new candidate patterns comprising intervals of the time series data set identified as having a pattern corresponding to the target pattern within a predefined confidence level.

9. The method of claim 8 further comprising:
receiving a user selected confidence level at the user interface;
displaying the plurality of candidate patterns identified within the selected confidence level within a predefined confidence level.

10. The computer implemented method of any of claims 7 to 9 wherein receiving a user input comprises:
receiving a selection of an interval of a time series data set having a target pattern to be searched.

11. The computer implemented method of any of claims 7 to 9 wherein receiving a user input comprising a graphical representation defining a target pattern comprises:
receiving a user-drawn graphical representation of a target pattern within a drawing area of the user interface.

12. The computer implemented method of claim 11 comprising:
displaying a drawing area on the user interface, the drawing area comprising a plurality of points which are moveable within the drawing area to create the graphical representation of the target pattern;
receiving a series of graphical data points corresponding to the user selected positions of the points within the drawing area.

13. The computer implemented method of claim 12 comprising:
receiving a user selection of a number of moveable points to be used to create the graphical representation defining the target pattern;
displaying a corresponding number of moveable points within the drawing area to be used to create the graphical representation of the target pattern.

14. An apparatus comprising one or more data processors configured to perform the steps of any preceding claim.

15. A computer readable medium comprising instructions which, when executed by a computer, cause the computer to carry out the steps of any of claims 1 to 13.
